(19) Europäisches Patentamt / European Patent Office / Office européen des brevets

(11) **EP 2 359 186 B1**

(12) **FASCICULE DE BREVET EUROPEEN**

(45) Date de publication et mention
de la délivrance du brevet:
**05.09.2012 Bulletin 2012/36**

(21) Numéro de dépôt: **09795476.2**

(22) Date de dépôt: **20.11.2009**

(51) Int Cl.:
*G02F 1/35* (2006.01)     *G02B 26/08* (2006.01)
*G02B 26/10* (2006.01)

(86) Numéro de dépôt international:
**PCT/FR2009/052234**

(87) Numéro de publication internationale:
**WO 2010/058136 (27.05.2010 Gazette 2010/21)**

(54) **DISPOSITIF D'ALLONGEMENT DE LA DURÉE DE VIE D'UN SYSTÈME OPTIQUE NON LINÉAIRE SOUMIS AU RAYONNEMENT D'UN FAISCEAU LASER INTENSE ET SOURCE OPTIQUE NON LINÉAIRE COMPRENANT CE DISPOSITIF**

EINRICHTUNG ZUR VERLÄNGERUNG DER DIENSTLEBENSDAUER EINES NICHTLINEAREN OPTISCHEN SYSTEMS, DAS DER STRAHLUNG EINES INTENSIVEN LASERSTRAHLS AUSGESETZT WIRD, UND DIE EINRICHTUNG ENTHALTENDE NICHTLINEARE OPTISCHE QUELLE

DEVICE FOR EXTENDING THE SERVICE LIFE OF A NON-LINEAR OPTICAL SYSTEM SUBJECTED TO THE RADIATION OF AN INTENSE LASER BEAM AND NON-LINEAR OPTICAL SOURCE INCLUDING SAID DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.11.2008 FR 0857915**

(43) Date de publication de la demande:
**24.08.2011 Bulletin 2011/34**

(73) Titulaire: **EOLITE Systems**
**33600 Pessac (FR)**

(72) Inventeurs:
• **HORAIN, David**
**F-33000 Bordeaux (FR)**

• **McDONAGH, Louis**
**F-33000 Bordeaux (FR)**
• **SABY, Julien**
**F-33000 Bordeaux (FR)**
• **SALIN, François**
**F-33170 Gradignan (FR)**
• **METIVIER, Philippe**
**F-33400 Talence (FR)**

(74) Mandataire: **Chauvin, Vincent et al**
**Cabinet Harle et Phelip**
**14/16 rue Ballu**
**75009 Paris (FR)**

(56) Documents cités:
WO-A-00/77890     WO-A-03/102665
US-A- 5 646 764     US-A1- 2002 175 149

**Description**

La présente invention concerne un dispositif d'allongement de la durée de vie d'un ou de plusieurs composants optiques linéaires ou non linéaires soumis au rayonnement d'un faisceau laser intense. L'invention trouve des applications notamment dans les convertisseurs optiques de fréquence et notamment les générateurs optiques d'harmoniques comprenant un cristal non linéaire, ce cristal étant soumis à un rayonnement potentiellement destructeur comme les rayonnements UV intenses et focalisés. L'invention s'applique également aux sources laser à oscillateur optique paramétrique (OPO) accordables en fréquence.

Les lasers à solides sont connus pour produire des faisceaux d'excellente qualité optique et sont utilisés dans de nombreuses applications dont le micro usinage de semi-conducteurs, le marquage de plastiques, la gravure de cellules solaires... Pour une grande part de ces applications il est nécessaire de convertir le rayonnement généralement infrarouge émis par le laser en un rayonnement à des fréquences plus élevées. Il y a un intérêt tout particulier à produire les seconde, troisième, quatrième voire cinquième harmoniques de la fréquence fondamentale afin d'obtenir des faisceaux continus ou pulsés de forte puissance et de grande qualité dans l'UV.

Les lasers à solide pulsés peuvent produire des puissances moyennes dépassant la centaine de watts sur des impulsions de durée relativement courte (inférieure à 200 ns). On peut citer des milieux lasers comme le Nd:YVO4, le Nd:YAG, le Nd:YLF ainsi que les fibres en verre dopé Nd ou Yb comme source d'impulsion laser pouvant opérer à très grande cadence (typiquement 10 à 500 kHz). La production du troisième harmonique est maintenant commerciale et des puissances de l'ordre de 20W ont été obtenues à 355 nm, de 4W à 266 nm et un intérêt croissant pour des longueurs d'onde encore plus courtes apparaît.

La difficulté majeure apparaissant lorsque l'on veut produire les harmoniques d'un laser pulsé à haute cadence provient de la durée de vie des composants optiques soumis à de fortes puissances dans l'UV. Il est connu que soumettre un composant comportant un traitement optique ou un cristal non linéaire pendant une longue durée à un fort rayonnement UV se traduit par une dégradation irréversible du composant sur une zone proche de la zone éclairée. La raison physique de cette dégradation reste un objet d'étude et n'est pas bien comprise. Des moyens d'allongement de la durée de vie d'une zone existent mais ne permettent toujours pas d'atteindre les durées de vie demandées par les applications industrielles de ces sources. Les dommages sont connus pour s'accélérer avec la densité de puissance incidente et pour les courtes longueurs d'onde et peuvent être induits par des imperfections à la surface des éléments optiques.

Les effets observés sont cumulatifs et se traduisent par une dégradation progressive de la qualité du faisceau produit et de la puissance dans l'UV.

Afin de produire un rayonnement UV la méthode classique consiste à focaliser un faisceau intense dans un cristal non linéaire. Les cristaux typiques sont le LBO, BBO ou CLBO mais tout autre cristal pourrait faire l'affaire. Dans le cas de lasers fonctionnant à haute cadence la faible énergie par impulsion oblige à focaliser le faisceau sur des diamètres de l'ordre de 100 $\mu$m. La densité de puissance atteint alors plusieurs dizaines de kW par cm$^2$ et finit par induire des défauts rédhibitoires.

Une méthode connue pour limiter la dégradation des cristaux consiste à déplacer le cristal non linéaire dans un plan transverse à l'axe du faisceau laser après une durée allant de quelques heures à quelques semaines afin de trouver une nouvelle zone du cristal qui n'a pas encore subi de dommage. La taille du faisceau étant de l'ordre de 100 microns et celle du cristal de typiquement 3x3 mm, on peut facilement décomposer la surface du cristal en plus d'une centaine de zones élémentaires que le faisceau va éclairer l'une après l'autre lors de ces déplacements. Si on considère que le faisceau peut rester 100h sur une zone sans perdre plus de 10% de sa puissance par exemple, la durée de vie du cristal est augmentée d'un facteur 100 pour atteindre environ 10 000h. Lorsque toutes les zones ont été progressivement utilisées il faut changer le cristal. Une telle méthode est décrite dans le brevet US 5,179,562 de Marason pour le cas des lasers continus et dans le brevet US 5,825,562 (Lai et al) pour le cas spécifique des lasers pulsés. Ce brevet US 5,825,562 décrit un système de translation comprenant deux platines de translation montées perpendiculaires l'une à l'autre et perpendiculaires au faisceau laser. D'autres brevets présentent des améliorations du système de translation ou de déplacement selon un trajet circulaire du cristal dans un plan perpendiculaire au faisceau (demande de brevet US2003/0147433 « Extended lifetime harmonic generator" Kafka *et al.*; brevet US 6,859,335 "Method of programmed displacement for prolonged usage of optical element under the irradiation of intensive laser beam"). Ces méthodes sont utilisées dans l'ensemble des lasers à solide émettant dans l'UV par génération de la 3$^{\text{ème}}$ ou de la 4$^{\text{ème}}$ harmonique disponibles sur le marché.

Ces méthodes présentent l'inconvénient majeur de nécessiter une translation parfaite sans aucune rotation du cristal autour d'un axe perpendiculaire à l'axe du faisceau. En effet, la génération d'harmonique dans un cristal non linéaire est basée sur un accord de phase. Ce dernier est obtenu en ajustant très finement l'angle entre l'axe du cristal et le faisceau laser. Si cet angle varie durant la translation, l'efficacité de conversion va changer et la puissance produite dans le rayonnement harmonique va varier. La précision typique pour un cristal de LBO de 15 mm de longueur est très inférieure à 1 milliradian. Elle peut être encore plus faible pour des cristaux très biréfringents comme le BBO ou pour des longueurs d'ondes très courtes. Il faut donc garantir que la translation du cristal sur plusieurs millimètres dans les deux directions perpendiculaires à l'axe du faisceau laser ne va pas induire de rotation de plus de quelques microradians. Une telle précision est très difficile à conserver sur des déplacements de plusieurs millimètres et durant des périodes de plusieurs années. De plus, la présence d'éléments mobiles rend impossible la fixation ferme du cristal dont l'orientation peut donc changer lors des transports. Il faut donc réajuster l'accord de phase à chaque translation du cristal. Ce réajustement de l'accord est en général réalisé par un changement de la température du cristal mais cela demande une boucle d'asservissement compliquée.

De plus, selon les méthodes de déplacement du composant optique, lorsqu'un laser comporte plusieurs composants optiques solides disposés en série sur le trajet optique du laser et soumis à un faisceau laser intense, chaque composant doit être équipé d'un système de translation pour modifier la zone d'éclairage du faisceau sur chaque composant, ce qui complique encore le dispositif. C'est en particulier le cas dans les générateurs d'harmoniques triples, quadruples ou quintuples, qui utilisent une cascade de cristaux non linéaires. Dans la suite de ce document, on entend par système optique non linéaire un ensemble de composants optiques comprenant au moins un composant optique non linéaire, qui peut être un cristal non linéaire. Lorsque le système optique comprend plusieurs composants, ceux-ci sont disposés en série sur le trajet optique.

Par ailleurs, le brevet US 5,646,764 décrit un dispositif pour faire tourner continûment le faisceau d'un laser suivant une trajectoire circulaire sur la surface d'un cristal afin d'éviter l'échauffement local du cristal. Le dispositif comprend deux lames identiques à faces planes et parallèles, les deux lames étant disposées de part et d'autre d'un cristal non linéaire de conversion optique de fréquence. Les deux lames sont inclinées symétriquement d'un angle fixe par rapport à l'axe du faisceau laser, et mises en rotation continue autour de l'axe du faisceau. Ce dispositif permet de faire bouger rapidement (plusieurs hertz) selon un cercle le point d'impact du faisceau, le cristal restant fixe. La rotation des deux lames doit être identique et synchronisée pour permettre de conserver en première approximation un faisceau de sortie de direction fixe. Toutefois, ce couplage des rotations de deux éléments optiques éloignées (par la présence d'un ou plusieurs cristaux) peut présenter des difficultés de réalisation. Ensuite, la trajectoire cylindrique du faisceau ne permet pas d'exploiter toute la surface du cristal, et ne permet pas d'allonger considérablement la durée de vie du cristal. Enfin, la compensation de la déviation de la première lame par la déviation de la seconde lame est généralement imparfaite si bien que le faisceau de sortie effectue un mouvement résiduel circulaire ou en spirale. Ce mouvement résiduel du faisceau de sortie est notamment dû à la différence de longueur d'onde entre les faisceaux traversant la première et la seconde lame et au chromatisme des lames. Ce mouvement parasite est d'autant plus gênant que la taille du faisceau est faible. Selon le document US5,646,764 la différence de déviation des deux lames est de plusieurs dizaines de microns, ce qui ne permet pas de conserver une direction et une position de faisceau de sortie constantes pour un faisceau de faible dimension.

Plus particulièrement, dans les applications de micro-usinage laser, la taille du faisceau laser UV est de l'ordre de 100 microns. Ce faisceau laser UV est généralement couplé à des optiques pour être précisément focalisé. La direction et la position du faisceau doivent être maintenues à quelques pourcent près c'est-à-dire à quelques microns près.

Un système de déplacement d'un faisceau laser est également connu de WO 03/102 665.

La présente invention a pour but de remédier à ces inconvénients et concerne plus particulièrement un dispositif selon la revendication 1 d'allongement de la durée de vie d'au moins un système optique non linéaire convertisseur de fréquence soumis au rayonnement d'un faisceau laser intense, le système optique étant apte à convertir un faisceau incident de fréquence optique fondamentale $\omega_1$ en un faisceau de sortie de fréquence optique $\omega_2$. Selon l'invention le dispositif comprend une première lame de transmission à faces planes et parallèles, d'épaisseur $e_2$ et d'indice $n_2(\omega_1)$ apte à être insérée sur le trajet optique dudit faisceau laser incident et à transmettre un faisceau, la normale $\eta_2$ à une face plane de ladite première lame formant un angle d'inclinaison ($i_2$) avec l'axe de propagation X du faisceau laser. Le dispositif comprend une seconde lame de transmission à faces planes et parallèles, d'épaisseur $e_3$ et d'indice $n_3(\omega_2)$ apte à être insérée sur le trajet optique du faisceau en sortie dudit système optique et à transmettre un faisceau de fréquence optique $\omega_2$, la normale $\eta_3$ à ladite seconde lame formant un angle d'inclinaison ($i_3$) par rapport à l'axe de propagation X' du faisceau. Le dispositif de l'invention comprend en outre un moyen de rotation transverse de ladite première lame autour d'au moins un axe (Y, Z) transverse à l'axe de propagation (X) du faisceau laser apte à modifier l'inclinaison ($i_2$) sur une gamme angulaire ($i_2^0 \pm \delta i_2$) pour déplacer le faisceau par rapport au système optique et un moyen de rotation transverse de ladite seconde lame autour d'au moins un axe (Y', Z') transverse à l'axe de propagation (X') du faisceau apte à modifier l'inclinaison ($i_3$) sur une gamme angulaire ($i_3^0 \pm \delta i_3$). Selon l'invention, les deux lames et les moyens de rotation transverse des deux lames sont aptes à minimiser l'amplitude du déplacement en position et en direction angulaire du faisceau de sortie sur la gamme d'inclinaison angulaire ($i_2^0 \pm \delta i_2$) de la première lame.

Selon un mode de réalisation particulier, le dispositif comprend des moyens de couplage mécanique des deux lames aptes à rendre solidaires l'inclinaison ($i_2$) de la première lame et l'inclinaison ($i_3$) de la seconde lame sur la gamme angulaire ($i_2^0 \pm \delta i_2$) et l'épaisseur $e_3$ de la 2nde lame est apte à minimiser l'amplitude du déplacement résiduel du faisceau de sortie en fonction de l'épaisseur $e_2$ de la 1ère lame, des indices optiques $n_2(\omega_1)$ et $n_3(\omega_2)$ et de la gamme angulaire ($i_2^0 \pm \delta i_2$).

Selon un mode de réalisation particulier de l'invention, les moyens de couplage des deux lames comprennent un moyen d'entraînement mécanique apte à entraîner l'inclinaison simultanée des deux lames avec des angles d'inclinaisons respectifs $i_2$ et $i_3$ opposés.

Selon un mode de réalisation préféré de l'invention, les moyens de couplage des deux lames comprennent un moyen d'entraînement mécanique apte à entraîner l'inclinaison simultanée des deux lames avec des angles d'inclinaisons respectives $i_2$ et $i_3$ égaux.

Avantageusement, le moyen de rotation est commun aux deux lames et apte à modifier l'inclinaison des deux lames d'un angle identique et le faisceau incident et le faisceau de sortie se propagent dans un plan entre les deux lames et le faisceau de sortie subit un nombre impair de réflections entre les lames.

Avantageusement, le diamètre du faisceau incident sur le système optique est inférieur à l'amplitude de déplacement du faisceau induit par l'inclinaison de la première lame sur la gamme d'inclinaison angulaire ($i_2^0 \pm \delta i_2$).

Selon un autre mode de réalisation particulier, les deux lames sont identiques et le dispositif comprend des moyens aptes à calculer et à appliquer un angle d'inclinaison ($i_3$) en fonction de l'épaisseur des lames, de leurs indices optiques $n_2(\omega_1)$ et $n_3(\omega_2)$ et de l'angle d'inclinaison ($i_2$) de manière à compenser le déplacement du faisceau de sortie pour chaque angle d'inclinaison de la 1$^{\text{ère}}$ lame sur la gamme angulaire ($i_2^0 \pm \delta i_2$).

Avantageusement, le dispositif de l'invention comprend un système optique ayant un grossissement optique G placé entre les deux lames et l'angle d'inclinaison ($i_3$), l'épaisseur, ($e_3$), et l'indice ($n_3$) de la 2$^{\text{nde}}$ lame sont déterminés en fonction du grossissement G dudit système optique de manière à compenser le déplacement du faisceau de sortie pour chaque inclinaison ($i_2$) sur la gamme angulaire ($i_2^0 \pm \delta i_2$).

L'invention concerne aussi une source optique non linéaire comprenant un système optique non linéaire et un dispositif d'allongement de la durée de vie dudit système optique non linéaire suivant l'un des modes de réalisation précédent, dont les lames sont disposées de part et d'autre dudit système optique non linéaire.

Selon un mode de réalisation particulier la source optique non linéaire de l'invention comprend un système optique non linéaire comprenant deux cristaux non linéaires situés entre les deux lames du dispositif d'allongement de la durée de vie desdits cristaux, le premier cristal non linéaire étant apte à doubler la fréquence de l'onde fondamentale incidente et le second cristal non linéaire étant apte à la génération de la 3$^{\text{ème}}$ harmonique par somme de fréquence entre l'onde fondamentale et sa seconde harmonique.

Selon un autre mode de réalisation, la source optique non linéaire de l'invention comprend un système optique non linéaire comprenant deux cristaux non linéaires situés entre les deux lames, le premier cristal non linéaire étant apte à doubler la fréquence de l'onde fondamentale incidente et le second cristal non linéaire étant apte à la génération de 4$^{\text{ème}}$ harmonique par doublage de fréquence de la seconde harmonique.

Selon encore un autre mode de réalisation, la source optique non linéaire de l'invention comprend un système optique non linéaire comprenant trois cristaux non linéaires situés entre les deux lames, le premier cristal non linéaire étant apte à doubler la fréquence de l'onde fondamentale incidente, le second cristal non linéaire étant apte à la génération de 3$^{\text{ème}}$ harmonique par mélange de fréquence de la seconde harmonique et de l'onde fondamentale, et le troisième cristal non linéaire étant apte à la génération de la 5$^{\text{ème}}$ harmonique par mélange de fréquence de la seconde harmonique et de la troisième harmonique produites par les premier et second cristaux.

L'invention concerne aussi une source optique non linéaire comprenant au moins un cristal situé entre les deux lames apte à produire un rayonnement cohérent par génération paramétrique optique.

L'invention concerne aussi une source optique non linéaire comprenant un moyen de mesurer la puissance émise du faisceau après conversion de fréquence et un système d'entraînement apte à entraîner la rotation transverse des lames lorsque la puissance émise diminue d'une valeur prédéfinie.

L'invention concerne également une source optique non linéaire comprenant un dispositif d'allongement de la durée de vie d'un système optique non linéaire placé à l'intérieur d'une cavité laser.

La présente invention concerne également les caractéristiques qui ressortiront au cours de la description qui va suivre et qui devront être considérées isolément ou selon toutes leurs combinaisons techniquement possibles.

Cette description est donnée à titre d'exemple non limitatif et fera mieux comprendre comment l'invention peut être réalisée en référence aux dessins annexés sur lesquels :

- la figure 1 représente un schéma de principe d'un dispositif de l'invention ;
- la figure 2 représente le principe de fonctionnement d'une lame inclinée à faces planes et parallèles ;
- la figure 3 représente schématiquement un générateur de 2$^{\text{nde}}$ harmonique selon l'art antérieur ;
- la figure 4 représente schématiquement un générateur de 2$^{\text{nde}}$ harmonique selon l'invention ;
- la figure 5A représente schématiquement le fonctionnement d'un système à deux lames inclinées de part et d'autre d'un cristal non linéaire selon une première inclinaison des deux lames, et la figure 5B selon une seconde inclinaison des deux lames ;
- la figure 6 représente une courbe de mesure de l'erreur de compensation du faisceau de sortie en fonction sur une gamme d'inclinaison angulaire ($i_2^0 \pm \delta i_2$) ;
- la figure 7 représente un générateur de 3$^{\text{ème}}$ harmonique selon l'art antérieur ;

EP 2 359 186 B1

- la figure 8 représente un premier mode de réalisation de générateur de 3ème harmonique selon l'invention ;
- la figure 9 représente un second mode de réalisation de générateur de 3ème harmonique selon l'invention;
- la figure 10 représente schématiquement un système de commande des orientations des lames dans un dispositif de l'invention;
- la figure 11 représente schématiquement un moyen de couplage mécanique des deux lames d'un dispositif de l'invention ;
- la figure 12 représente un exemple de balayage de la zone d'éclairage par le faisceau laser en utilisant un dispositif de l'invention.

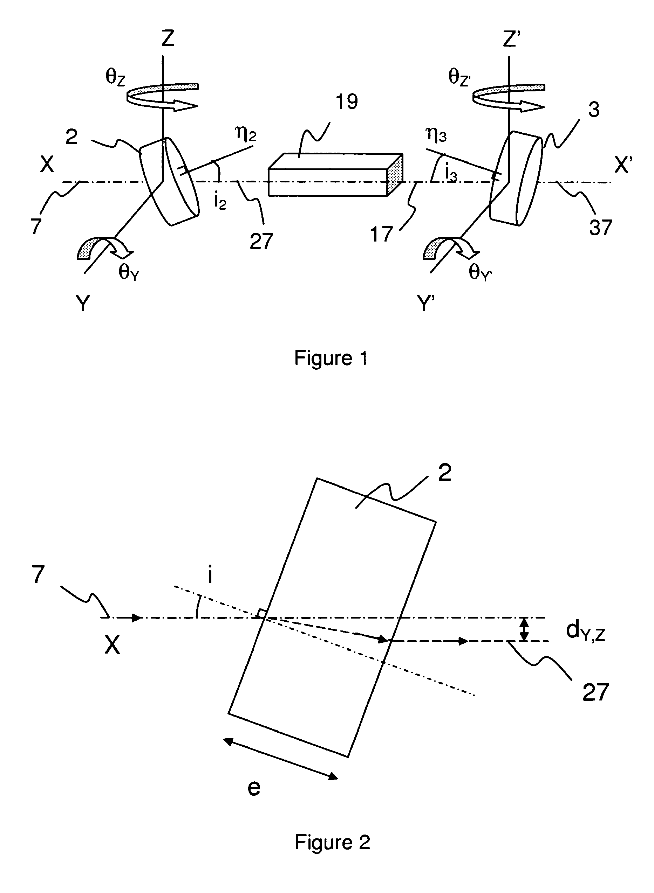

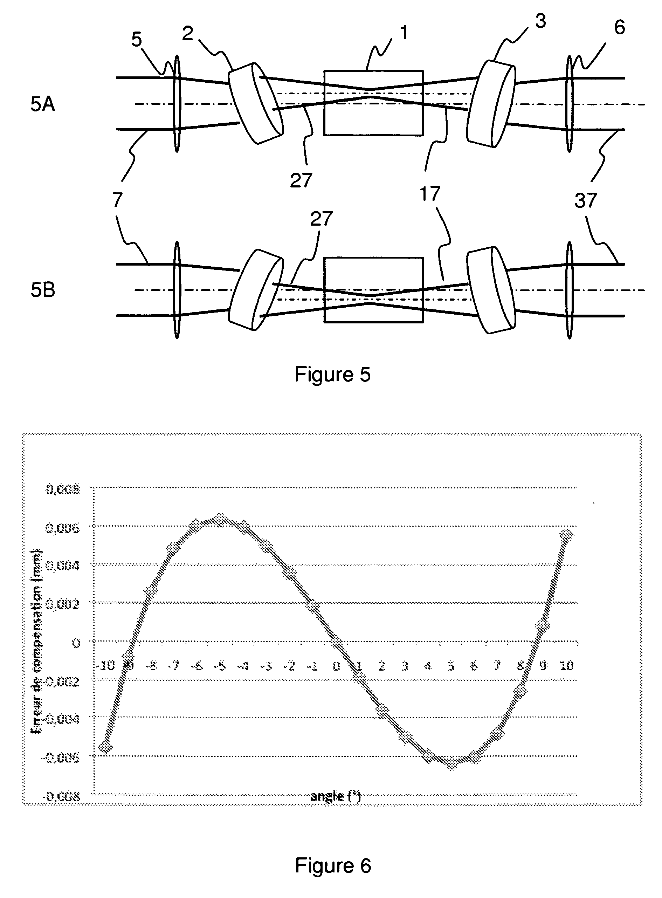

La figure 1 représente schématiquement le principe de fonctionnement d'un dispositif d'allongement de la durée de vie d'un système optique non linéaire suivant l'invention. Un système optique non linéaire 19 est situé sur l'axe de propagation d'un faisceau optique 7, par exemple un faisceau laser. Le système optique non linéaire est dans l'exemple de principe considéré constitué d'un composant optique non linéaire 1. Le composant optique 1 reçoit un faisceau optique incident 7 de fréquence optique fondamentale $\omega_1$ se propageant suivant un axe X et transmet un faisceau optique de sortie 17 de fréquence optique $\omega_2$ se propageant suivant un axe X'. On cherche à minimiser la détérioration du composant optique 1 soumis au rayonnement optique du faisceau laser. Le dispositif comprend deux lames 2 et 3 à faces planes et parallèles d'épaisseurs respectives $e_2$, $e_3$. Les deux lames sont placées sur le trajet optique du faisceau optique. La première lame 2 est placée sur le trajet du faisceau incident 7 et inclinée d'un angle $i_2$ par rapport à l'axe X. L'angle d'inclinaison $i_2$ est l'angle formé entre la normale $\eta_2$ à la surface de la lame 2 et l'axe du faisceau 7. Le faisceau incident 7 traverse la lame 2 et ressort en un faisceau transmis 27 de fréquence optique $\omega_1$. Le faisceau transmis 27 se propage suivant un axe parallèle à l'axe de propagation du faisceau incident 7. La seconde lame 3 est placée sur le trajet du faisceau 17 de fréquence optique $\omega_2$ en sortie du composant optique 1 et inclinée d'un angle $i_3$ par rapport à l'axe X'. L'angle d'inclinaison $i_3$ est l'angle formé entre la normale $\eta_3$ à la surface de la lame 3 et l'axe du faisceau 17. L'inclinaison de chaque lame 2 respectivement 3 peut être modifiée par des rotations transverses autour de deux axes (Y, Z) respectivement (Y', Z') perpendiculaires à l'axe de propagation X respectivement X' du faisceau laser. L'inclinaison $i_2$ de la lame 2 est variable sur une gamme angulaire ($i_2^0 \pm \delta i_2$) par une ou deux rotations transverses à l'axe X. De même, l'inclinaison $i3$ de la lame 3 est variable sur une gamme angulaire ($i_3^0 \pm \delta i_3$) par une ou deux rotations transverses à l'axe X'. Dans l'exemple de réalisation illustré Figure 6 l'amplitude des variations angulaires de $i_2$ est de $\pm 10$ deg. Les lames 2 et 3 n'effectuent pas de rotation axiale autour de l'axe du faisceau. La modification de l'inclinaison $i_2$ de la première lame 2 induit un déplacement ($d_{Y2}$, $d_{Z2}$) du faisceau 27 transmis par ladite lame 2 sur le composant optique 1. Ce déplacement ($d_{Y2}$, $d_{Z2}$) permet de modifier la zone de l'élément optique soumise au rayonnement optique du faisceau incident. La seconde lame 3 permet de compenser au mieux le décalage latéral ($d_{Y2}$, $d_{Z2}$) de l'axe du faisceau 17 en sortie du composant optique 1 sur toute une gamme d'inclinaison des lames 2, 3 et de maintenir fixe l'axe de propagation du faisceau laser 37 en sortie du dispositif en ajustant les inclinaisons respectives des deux lames 2 et 3 et/ou en optimisant l'épaisseur des deux lames.

La figure 2 indique de manière plus détaillée la propagation du faisceau laser dans une lame 2 ou 3. Pour une meilleure explication, la figure 2 représente une projection dans un plan comprenant l'axe X de propagation du faisceau incident et la normale $\eta$ à une lame à faces planes et parallèles. Une lame à faces planes et parallèles d'épaisseur e est insérée sur l'axe du faisceau optique incident 7 devant le composant optique 1. L'inclinaison de cette lame d'un angle i par rapport à l'axe du faisceau 7 induit une déviation de l'axe du faisceau 27 en sortie de la lame, qui se propage suivant un axe décalé d'une quantité d. La traversée d'une lame d'épaisseur e et d'indice n dont la normale fait un angle i avec le faisceau, induit un déplacement du faisceau d'une distance d donnée par :

$$d = e \sin i \cdot \left[ 1 - \frac{\cos i}{\left(n^2 - \sin^2 i\right)^{1/2}} \right] \qquad [I]$$

En ajustant l'angle i on peut donc ajuster la distance d. L'ajustement de l'angle i est obtenu par la combinaison de deux rotations $\theta_Y$, $\theta_Z$ autour de deux directions (Y, Z) transverses à l'axe de propagation X, ce qui permet de dévier le faisceau en sortie de la lame suivant deux directions ($d_Y$, $d_Z$) transverses à l'axe de propagation du faisceau. Il est ainsi possible de modifier la zone d'éclairage du faisceau sur le composant optique 1 sur une zone large par rapport à la taille du faisceau. L'axe du faisceau 27 émergeant de la lame 2 est par construction parfaitement parallèle à l'axe du faisceau 7 d'entrée quelle que soit l'inclinaison i de la lame. Un déréglage de la lame 2 en translation ou en rotation ne peut par construction introduire qu'une translation du faisceau de sortie mais en aucun cas une variation de sa direction.

La figure 2 représente une déviation du faisceau dans un plan. Lorsque la lame est orientable autour de deux axes perpendiculaires à l'axe de propagation du faisceau laser, la déviation peut également se produire dans une autre

5

direction perpendiculaire à l'axe de propagation.

Dans de nombreuses applications et notamment en micro-usinage laser, il est important d'allonger la durée de vie du composant optique, mais il est également essentiel de délivrer un faisceau laser de sortie dont la direction et la position sont stables.

Dans certains cas particuliers, le faisceau de sortie peut être rendu parfaitement colinéaire au faisceau d'entrée en ajoutant une seconde lame 3 dont l'épaisseur et l'orientation sont optimisés pour compenser le décalage d induit par la première lame 2.

Une compensation parfaite est obtenue lorsque la longueur d'onde des faisceaux incident et transmis par le composant optique est identique en utilisant deux lames identiques (de même épaisseur et même matériau) et inclinées d'un angle opposé. La compensation est valable quel que soit l'angle d'inclinaison (symétrique) des deux lames.

Lorsque la longueur d'onde d'entrée (ou la fréquence optique $\omega_1$) est différente de la longueur d'onde de sortie (ou la fréquence optique $\omega_2$), on sait également compenser le déplacement du faisceau de sortie dans les deux cas particuliers suivants :

- en utilisant deux lames identiques et en ajustant l'inclinaison de la deuxième lame pour compenser le déplacement du faisceau induit par la 1ère lame à la 1ère longueur d'onde par un déplacement opposé induit par la 2nde lame à la 2nde longueur d'onde, ou
- en utilisant des lames à une inclinaison symétrique (fixe) et en calculant l'épaisseur des lames pour que leur décalage induit à cette inclinaison et à ces longueurs d'onde se compense.

Ces deux solutions ne sont compatibles qu'avec une rotation axiale des lames qui conserve leur inclinaison fixe. La compensation du décalage du faisceau en sortie n'est alors valable que pour une paire définie de longueurs d'onde d'entrée et de sortie (mais pas pour un OPO où la longueur d'onde de sortie est variable).

Une compensation du décalage du faisceau en sortie est beaucoup plus difficile à obtenir lorsque les longueurs d'onde sont différentes et que l'inclinaison des lames est variable. Dans ce cas, le faisceau de sortie n'a généralement pas une position constante en fonction d'une inclinaison variable. L'erreur de repositionnement du faisceau de sortie dépend à la fois des angles d'inclinaison des deux lames et des longueurs d'onde d'entrée et de sortie. Un objet de l'invention est de minimiser cette erreur de repositionnement pour une gamme de variation angulaire d'inclinaison des lames.

En effet, l'indice optique n d'une lame varie en fonction de la longueur d'onde du fait de la dispersion. Le décalage d dépend à la fois des propriétés physiques de la lame (son épaisseur e, son indice n) de son inclinaison i et de la longueur d'onde du faisceau qui la traverse. L'invention utilise ces différents paramètres pour obtenir la meilleure compensation possible entre deux lames 2 et 3 sur une gamme prédéfinie de rotations transverses des lames, c'est-à-dire sur une gamme d'angles d'inclinaisons $i_2$, $i_3$.

Cette optimisation dépend de l'application du dispositif de l'invention, en particulier lorsque plusieurs longueurs d'ondes sont mises en jeu, comme détaillé dans les exemples suivants.

L'invention peut servir à de nombreuses applications et sera explicitée dans différents cas particuliers que sont la production du second harmonique et la production du troisième harmonique d'un faisceau laser.

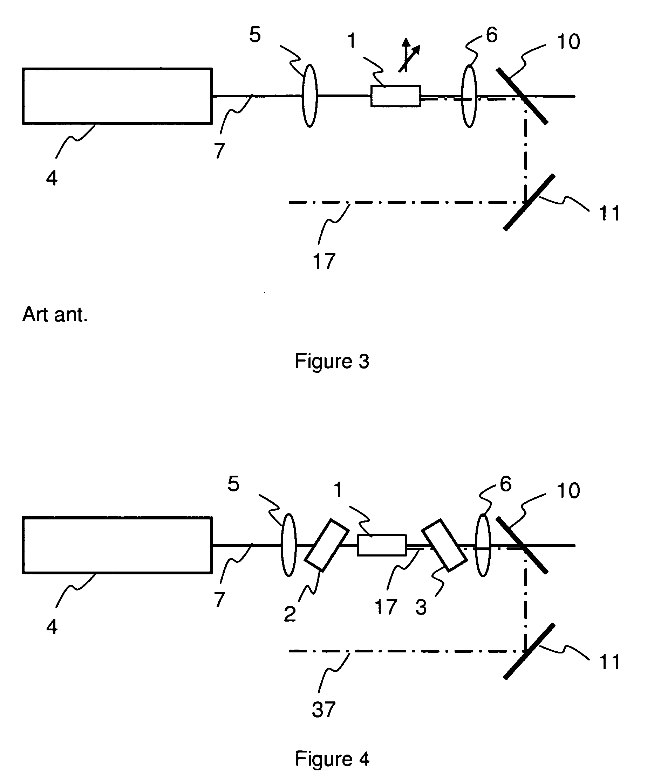

Un schéma classique de génération de 2nde harmonique est représenté sur la figure 3. Une source laser 4 produit un rayonnement source à une fréquence $\omega$ généralement située dans le proche infrarouge. La source 4 comprend un premier cristal non linéaire (non représenté) qui convertit le rayonnement source à la fréquence $2\omega$ située dans le visible. La source 4 émet donc un rayonnement visible 7 dirigé vers un moyen optique de focalisation 5 qui est en général une lentille. Le moyen optique 5 peut également être un miroir ou un ensemble de miroirs et/ou de lentilles. La lentille 5 focalise le faisceau 7 en un point sur un cristal non linéaire 1. Le cristal non linéaire 1 est adapté au doublage de fréquence du faisceau 7 et génère un faisceau 17 à la fréquence $4\omega$. Un système optique comprenant une lentille 6 de collimation et un ou plusieurs miroirs dichroïques 10 et 11 permet de séparer le faisceau 7 à la fréquence $2\omega$ du faisceau 17 à la fréquence $4\omega$. Dans le dispositif de l'art antérieur représenté figure 3, le cristal 1 est généralement monté sur un système de déplacement qui permet de changer le point d'impact du faisceau 7 sur le cristal non linéaire lorsque que le rendement de conversion vers la 4ème harmonique baisse.

Selon un premier mode de réalisation de l'invention, représenté figure 4, deux lames 2 et 3 sont insérées entre les moyens optiques 5, 6 et le cristal 1. Le cristal non linéaire 1 reste fixe et ne requiert donc pas de système de déplacement. La lame 2 est intercalée entre la lentille 5 et le cristal 1 et la lame 3 entre le cristal 1 et la lentille 6. Les lames 2 et 3 sont orientables avec une inclinaison variable autour de deux axes Y, Z perpendiculaires au faisceau laser. De façon optimale les lames 2, 3 comportent un traitement anti-reflet aux longueurs d'onde d'utilisation.

La figure 5 représente schématiquement l'effet de déplacement des faisceaux sur le cristal 1 et en sortie du dispositif produit par une paire de lames 2, 3 inclinées sur un faisceau laser focalisé pour des orientations différentes de la paire de lames, représentées respectivement figure 5A et 5B. Les lames 2, 3 induisent un décalage des axes optiques. La première lame 2 utilisée seule permet d'obtenir l'effet de déplacement du point d'impact du faisceau transmis 27 sur le cristal 1, mais la position et la direction du faisceau de sortie 37 changent avec la variation d'inclinaison de cette lame 2, ce qui n'est en général pas acceptable. L'épaisseur de la seconde lame 3 et/ou son inclinaison $i_3$ sont optimisés pour compenser au mieux le déplacement de la première lame 2 sur une gamme d'inclinaisons des lames.

Dans l'application à un générateur optique d'harmoniques, le faisceau 17 qui nous intéresse à la sortie du cristal non linéaire 1 n'a pas la même longueur d'onde que le faisceau incident 27 sur ce cristal 1. Il convient donc d'en tenir compte dans le calcul de l'orientation des lames 2 et 3. La formule [I] montre que le décalage d dépend de l'angle d'incidence i mais aussi de l'indice n qui varie avec la longueur d'onde. En utilisant des angles d'inclinaison fixes, on peut compenser le décalage en utilisant deux lames identiques (même épaisseur et même matériau) mais orientées avec des angles légèrement différents pour compenser la différence d'indice ou utiliser des orientations de même grandeur mais de signe opposé avec des lames d'épaisseurs physiques différentes calculées de façon à ce que l'épaisseur optique de la lame 2 à longueur d'onde du faisceau 7 corresponde à l'épaisseur optique de la lame 3 à longueur d'onde du faisceau 17. Cette compensation n'est toutefois valable que pour des angles d'inclinaison $i_2$ et $i_3$ constants, et pour les longueurs d'onde $\omega_1$ d'entrée et $\omega_2$ de sortie également fixes.

Une étude plus approfondie de la relation [I] nous montre que la relation entre d, i, e et n n'étant pas linéaire, un changement de l'indice n ne peut pas être compensé par un simple changement de l'épaisseur e lorsque i est variable sur une gamme d'angles d'inclinaison. Si la lame 2 possède une épaisseur $e_2$ et un indice $n_2$, et la lame 3 un indice $n_3$, on peut trouver une épaisseur $e_3$ de la lame 3 qui minimise l'erreur de compensation de décalage pour une plage d'angles d'incidence et donc une plage de décalages donnée. La figure 6 montre un exemple de résultat de l'erreur de repositionnement commise en utilisant une lame 2 de 26 mm d'indice 1,45 à 515 nm et une lame 3 de même matériau à 243 nm.

L'épaisseur optimale $e_3$ de la lame 3 qui permet de minimiser l'erreur moyenne sur une plage de rotation de $i_2$ de $\pm 10°$ est une épaisseur de 24,9 mm, relativement éloignée de l'épaisseur physique donnée pour égaliser les épaisseurs optiques (25,64 mm) qui correspondent à une optimisation pour un angle unique $i_2=i_3=0$.

L'optimisation peut être obtenue par différentes méthodes classiques de minimisation de l'erreur. En particulier on peut appliquer la méthode des moindres carrés qui revient à minimiser la distance entre les deux courbes $d_2(i)$ et $d_3(i)$. Mathématiquement cela revient à chercher un jeu de valeurs de $n_3$ et $e_3$ qui minimise la quantité:

$$\int_{i=i_{min}}^{i=i_{max}} (d_2 - d_3)\, di$$

On peut néanmoins décider d'augmenter le poids de certaines inclinaisons (par exemple celles qui sont proches de l'axe et qui correspondent au centre du cristal). Dans ce cas on met un poids sur chaque valeur de d et la formule devient:

$$\int_{i=i_{min}}^{i=i_{max}} p(i)(d_2 - d_3)\, di$$

où p(i) est le poids choisi pour l'inclinaison i.

Cette optimisation suppose que les angles $i_2$ et $i_3$ sont identiques.

On peut décider d'annuler exactement le déplacement (soit $d_2-d_3=0$) pour un angle particulier mais cela revient en général à augmenter l'erreur pour les autres angles.

On observe sur la figure 6 que le déplacement résiduel du faisceau en sortie du dispositif de compensation à deux lames de l'invention ne se déplace que quelques microns (amplitude maximum de $\pm$ 6 microns), ce qui est acceptable par rapport à la taille du faisceau (environ 100 microns).

Un avantage de ce dispositif est qu'il permet de fixer rigidement les cristaux non linéaires dans le laser et que l'accord de phase de ceux-ci est insensible au déplacement et à l'orientation des lames 2, 3 introduisant le décalage.

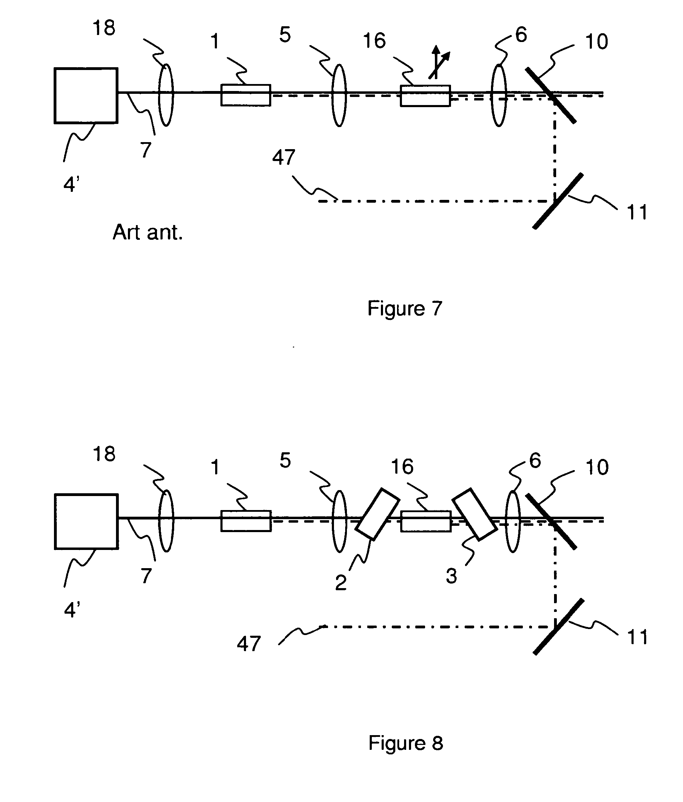

Une seconde mise en oeuvre particulière de l'invention concerne la production de la troisième harmonique. Un dispositif classique de génération de 3ème harmonique est représenté schématiquement sur la figure 7. Une source laser 4' est utilisée pour produire un rayonnement à la fréquence $\omega$ généralement située dans le proche infrarouge. Le rayonnement infrarouge du laser est focalisé par des moyens optiques 18 sur un premier cristal non linéaire 1 qui convertit le rayonnement à la fréquence $2\omega$. Cette conversion n'étant pas totale, le système émet alors un faisceau comprenant à la fois un rayonnement 7 à la fréquence $\omega$ et un rayonnement 17 à la fréquence $2\omega$. Ces faisceaux confondus 7 à $\omega$ et 17 à $2\omega$ sont incidents sur un moyen optique de focalisation qui est en général une lentille 5. La lentille 5 focalise les deux faisceaux 7, 17 en un point unique sur un second cristal non linéaire 16. Le second cristal non linéaire 16 est adapté pour permettre la sommation de fréquence des faisceaux 7 et 17 produire un faisceau 47 à la fréquence 3ω. Un système optique comprenant une lentille de focalisation 6 et un ou plusieurs miroirs dichroïques 10 et 11 permet de séparer les faisceaux 7 et 17 aux fréquences ω et 2ω respectivement du faisceau 47 à la fréquence 3ω. De façon optimale l'orientation du cristal 1 est choisie de façon à ce que la direction de "walk-off" des faisceaux 7 et 17 dans le cristal 1 soit opposée à la direction de walk-off de ces mêmes faisceaux dans le cristal 16.

De façon optimale, la température des cristaux 1 et 16 est stabilisée avec une précision de l'ordre de 0,1°C.

Dans les dispositifs antérieurs, le cristal 16 est généralement monté sur un système de déplacement qui permet de changer le point d'impact des faisceaux 7 et 17 lorsque que le rendement de conversion vers le 3ème harmonique baisse, les faisceaux optiques 7, 17 et 47 restant fixes.

Selon un second mode de réalisation préféré de l'invention, représenté figure 8, les deux lames 2 et 3 sont insérées entre les moyens optiques 5, 6 et le cristal 16. La lame 2 est intercalée entre la lentille 5 et le cristal 16 et la lame 3 entre le cristal 16 et la lentille 6. Les lames 2, 3 sont orientables avec une inclinaison $i_2$, respectivement $i_3$ variable sur une gamme angulaire d'inclinaisons par rotations transverses autour de deux axes Y, Z perpendiculaires au faisceau laser. Le cristal non linéaire 16 reste au contraire fixe et ne requiert pas de système de déplacement. De façon optimale les lames 2, 3 comportent un traitement anti-reflet aux longueurs d'onde d'utilisation. Une limitation du dispositif présenté sur la figure 8 provient du chromatisme du décalage introduit par la lame 2. En effet les deux faisceaux 7 et 47 ne sont pas à la même longueur d'onde, et vont donc subir des décalages très légèrement différents qui peuvent éventuellement nuire à la génération de la 3ème harmonique.

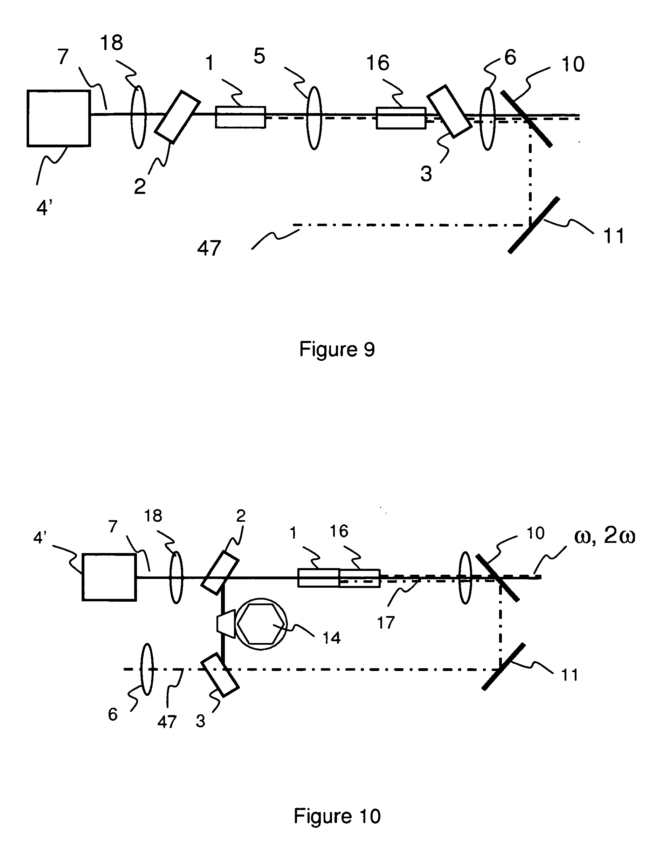

Selon un troisième mode de réalisation du dispositif de l'invention représenté figure 9, la lame 2 est placée en avant du premier cristal doubleur 1. Le sens et l'amplitude du mouvement de la lame 3 doit alors prendre en compte le grandissement introduit de la lentille 5 ainsi que la différence de longueur d'onde entre les faisceaux 7 et 47. Ce pilotage de la variation d'inclinaison de la lame 3 peut être effectué à l'aide d'un système électronique capable de calculer l'orientation de la lame 3 afin de compenser le déplacement induit par la lame 2. Le dispositif peut être simplifié en omettant la lentille 5. Dans ce cas la dimension des faisceaux dans les cristaux 1 et 16 est approximativement égale.

La figure 10 représente un schéma d'implantation du dispositif dans un mode de réalisation simplifié. Un système électronique de commande 13 pilote les variations d'orientation des lames 2 et 3. Selon un premier mode de réalisation où les lames sont équivalentes optiquement (même épaisseur, même matériau), le système de commande assure que les orientations respectives $i_2$, $i_3$ des lames 2, 3 sont parfaitement identiques mais opposées. Selon un quatrième mode de réalisation dans lequel les lames sont physiquement équivalentes ou bien dans lequel les lames ne sont pas optiquement équivalentes, le système de commande calcule la correction d'orientation de la lame 3 par rapport à l'orientation de la lame 2, pour chaque inclinaison $i_2$ de la lame 2.

En partant du résultat de la figure 6, on peut alors concevoir le dispositif pour que les déplacements angulaires des lames 2 et 3 soient identiques (ou symétriques). Le système électronique peut alors être remplacé par un système mécanique de couplage représenté sur la figure 10. Un seul moteur 14 par axe de rotation permet de commander un déplacement identique des les deux lames.

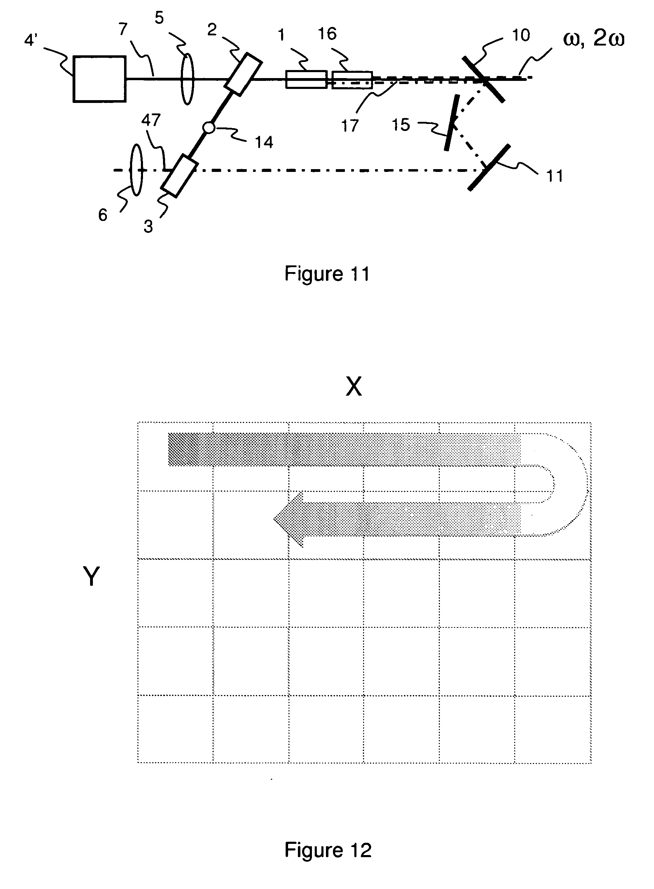

Enfin il existe une configuration optimisée dans laquelle un seul système d'orientation peut être utilisé pour déplacer les deux lames 2, 3. Il est important de noter que dans tous les schémas précédents les lames devaient subir des rotations de sens inverses qui rendaient leur couplage compliqué. Le même effet de compensation peut être obtenu avec un seul système de commande d'orientation à condition d'introduire un nombre impair de miroirs entre les deux lames. La figure 11 représente un exemple de réalisation préféré avec trois miroirs 10, 11 et 15. Le système devient alors extrêmement stable et simple. Les deux lames 2, 3 étant solidaires une variation accidentelle de leur orientation respective ne se traduit que par un déplacement du point d'impact dans le cristal et aucunement sur la direction ou la position du faisceau 47.

L'épaisseur des lames 2 et 3 est calculée de façon à minimiser l'erreur de compensation en prenant en compte la différence d'indice vu par les rayonnements 7 et 47 en utilisant la relation [I] sur la gamme de variation des angles d'inclinaison de $i_2$ et $i_3$.

Dans le schéma de la figure 11, la dimension des faisceaux dans les cristaux 1 et 16 est approximativement égale. On peut avoir intérêt à avoir une dimension de faisceau différente dans les deux cristaux. Pour ce faire on introduit un système optique présentant un grandissement G entre les cristaux 1 et 16. Dans ce cas il faut tenir compte du système optique dans le calcul de la compensation par la lame 3 du déplacement introduit par la lame 2. On peut jouer soit sur son épaisseur optique pour conserver une rotation identique pour les deux lames, soit utiliser des rotations indépendantes. Pour utiliser le dispositif de la figure 11 il faut impérativement que le signe du grandissement entre les cristaux 1 et 16 soit positif. Dans le cas ou il y a une conjugaison optique entre les deux cristaux et où on veut utiliser le mode simplifié de compensation à un seul mécanisme déplaçant simultanément les lame 2 et 3 le nombre de réflexions à introduire sur le parcours optique entre la lame 2 et la lame 3 doit toujours être impair.

Les systèmes présentés en lien avec les figures 7 à 11 correspondent au cas particulier de la génération de troisième harmonique, mais s'appliquent aussi bien dans d'autres cas nécessitant une variation au cours du temps de la position du faisceau sur un élément optique, comme la génération de cinquième harmonique, la génération paramétrique optique voire le pompage de matériaux laser dans l'UV ou la production d'effets non linéaires (Raman par exemple).

Le même dispositif s'applique également à des convertisseurs optiques de fréquence, dont les Oscillateurs Paramétriques Optiques (ou OPO), qui permettent de fabriquer des sources de lumière accordables en longueur d'onde ($\omega_2$ variable).

Dans les exemples précédents l'amplitude de la rotation de la lame 2 (c'est-à-dire la gamme d'inclinaisons $i_2^0 \pm \delta i_2$) est calculée pour introduire un déplacement $d_2$ correspondant à environ 3 fois le diamètre du faisceau sur le cristal. Les variations d'inclinaison des lames sont préférentiellement discontinues entre deux périodes d'utilisation du dispositif, le faisceau restant fixe entre deux déplacements. Une rotation transverse des lames est appliquée typiquement toutes les 100 à 500 heures. La formule [I] permet de déterminer la valeur de l'amplitude de cette rotation en fonction de la valeur absolue de l'angle d'inclinaison.

Différentes stratégies de mouvements de balayage du faisceau sur le cristal peuvent être utilisées. La lame peut par exemple être tournée progressivement autour d'un axe horizontal jusqu'à ce que le faisceau atteigne le bord du cristal. La lame est alors tournée d'un petit angle selon l'axe vertical et on peut reprendre un mouvement inverse selon l'axe horizontal. Le mouvement du faisceau dans un plan transverse à son axe de propagation suit alors une trajectoire de balayage telle que représentée sur la figure 12.

Le dispositif de l'invention permet de déplacer localement un faisceau laser par rapport à un composant optique suivant deux directions indépendantes transverses à l'axe du faisceau, tout en maintenant la direction du faisceau transmis parallèle à la direction incidente et la position du faisceau en sortie du dispositif fixe. Seul le faisceau à l'intérieur du dispositif se déplace ainsi par rapport à un système optique non linéaire fixe tout en garantissant une parfaite orientation du faisceau laser par rapport au système optique quelque soit sa position et en garantissant le repositionnement parfait (en angle et en position) du faisceau laser en sortie du dispositif. Le système optique non linéaire peut être un cristal non linéaire, un groupe de cristaux non linéaires, un ensemble de composants optiques non linaires ou toute combinaison comprenant les éléments susdits.

## Revendications

1. Dispositif d'allongement de la durée de vie d'un système optique non linéaire (19) convertisseur de fréquence soumis au rayonnement d'un faisceau laser incident (7, 27), ledit système optique (19) étant apte à convertir le faisceau incident (7, 27) de fréquence optique fondamentale $\omega_1$ en un faisceau de sortie (17) de fréquence optique $\omega_2$, le dispositif comprenant :

   - une première lame (2) de transmission à faces planes et parallèles, d'épaisseur $e_2$ et d'indice $n_2(\omega_1)$ apte à être insérée sur le trajet optique dudit faisceau laser incident (7) en amont du système optique et à transmettre un faisceau (27), la normale $n_2$ à une face plane de ladite première lame (2) formant un angle d'inclinaison $i_2$ avec l'axe de propagation X du faisceau laser (7),
   - une seconde lame (3) de transmission à faces planes et parallèles, d'épaisseur $e_3$ et d'indice $n_3(\omega_2)$ apte à être insérée sur le trajet optique du faisceau (17) en sortie dudit système optique (19) et à transmettre un faisceau (37, 47) de fréquence optique $\omega_2$, la normale $\eta_3$ à ladite seconde lame (3) formant un angle d'inclinaison $i_3$ par rapport à l'axe de propagation X' du faisceau (17),

   **caractérisé en ce qu'**il comprend :

   - un moyen de rotation transverse de ladite première lame (2) autour d'au moins un axe (Y, Z) transverse à l'axe de propagation X du faisceau laser (7) apte à modifier l'inclinaison $i_2$ sur une gamme angulaire $i_2^0 \pm \delta i_2$ pour déplacer le faisceau (7) par rapport au système optique (19), sans rotation axiale de la première lame (2) autour de l'axe du faisceau (7),
   - un moyen de rotation transverse de ladite seconde lame (3) autour d'au moins un axe (Y', Z') transverse à l'axe de propagation X' du faisceau (17) apte à modifier l'inclinaison $i_3$ sur une gamme angulaire $i_3^0 \pm \delta i_3$, sans rotation axiale de la seconde lame (3) autour de l'axe du faisceau (17),
   - lesdites première et seconde lames (2, 3) et lesdits moyens de rotation transverse des deux lames étant aptes à minimiser l'amplitude du déplacement en position et en direction angulaire du faisceau de sortie (37, 47) sur la gamme d'inclinaison angulaire $i_2^0 \pm \delta i_2$ de la première lame.

2. Dispositif selon la revendication 1, **caractérisé en ce qu'**il comprend des moyens de couplage mécanique des première et seconde lames (2) et (3) aptes à rendre solidaires l'inclinaison $i_2$ de la première lame (2) et l'inclinaison $i_3$ de la seconde lame (3) sur la gamme angulaire $i_2^0 \pm \delta i_2$ et **en ce que** l'épaisseur $e_3$ de la 2nde lame est apte à minimiser l'amplitude du déplacement résiduel du faisceau de sortie (37, 47) en fonction de l'épaisseur $e_2$ de la 1ère lame, des indices optiques $n_2(\omega_1)$ et $n_3(\omega_2)$ et de la gamme angulaire $i_2^0 \pm \delta i_2$.

3. Dispositif selon la revendication 2, **caractérisé en ce que** les moyens de couplage des première et seconde lames (2, 3) comprennent un moyen d'entraînement mécanique apte à entraîner l'inclinaison simultanée des première et seconde lames (2, 3) avec des angles d'inclinaisons respectifs $i_2$ et $i_3$ opposés.

4. Dispositif selon la revendication 2, **caractérisé en ce que** les moyens de couplage des première et seconde lames (2, 3) comprennent un moyen (entraînement mécanique apte à entraîner l'inclinaison simultanée des première et seconde lames (2, 3) avec des angles d'inclinaisons respectives $i_2$ et $i_3$ égaux.

5. Dispositif selon l'une des revendications 2 à 4 **caractérisé en ce qu'**il comprend un moyen de rotation commun à la première lame (2) et la seconde lame (3) apte à modifier l'inclinaison des première et seconde lames (2) et (3) d'un angle identique et **en ce que** le faisceau incident (7, 27) et le faisceau de sortie (17,37,47) se propagent dans un plan entre les première et seconde lames (2, 3) et le faisceau de sortie subit un nombre impair de réflections entre les première et seconde lames 2 et 3.

6. Dispositif selon l'une des revendications 1 à 5, **caractérisé en ce que** l'amplitude de déplacement du faisceau (27) induit par l'inclinaison de la lame (2) sur la gamme angulaire $i_2^0 \pm \delta i_2$ est choisie de manière à rester supérieure au diamètre du faisceau laser (27) incident sur le système optique (19).

7. Dispositif selon la revendication 1, **caractérisé en ce que** les première et seconde lames (2, 3) sont identiques et **en ce qu'**il comprend des moyens aptes à calculer et à appliquer un angle d'inclinaison ($i_3$) en fonction de l'épaisseur ($e_2=e_3$) des première et seconde lames (2, 3), des indices optiques $n_2(\omega_1)$ et $n_3(\omega_2)$ et de l'angle d'inclinaison $i_2$ de manière à compenser le déplacement du faisceau de sortie (37, 47) pour chaque inclinaison ($i_2$) sur la gamme angulaire $i_2^0 \pm \delta i_2$.

8. Dispositif selon l'une quelconque des revendications 1 à 7, **caractérisé en ce qu'**il comprend un système optique (5, 6) ayant un grossissement optique placé entre les première et seconde lames et **en ce que** l'angle d'inclinaison $i_3$, l'épaisseur ($e_3$), et l'indice ($n_3$) de la lame (3) sont déterminés en fonction du grossissement du système (5, 6) de manière à compenser le déplacement du faisceau de sortie (37, 47) pour chaque inclinaison $i_2$ sur la gamme angulaire $i_2^0 \pm \delta i_2$.

9. Source optique non linéaire comprenant un système optique non linéaire (19) **caractérisée en ce qu'**elle comprend un dispositif selon l'une des revendications 1 à 6, dont les première et seconde lames (2, 3) sont disposées de part et d'autre dudit système optique non linéaire (19).

10. Source optique non linéaire selon la revendication 9, **caractérisée en ce que** le système optique non linéaire (19) comprend deux cristaux non linéaires (1, 16) situés entre les première et seconde lames (2, 3), le premier cristal non linéaire (1) étant apte à doubler la fréquence de l'onde fondamentale incidente et le second cristal non linéaire (16) étant apte à la génération de la 3ème harmonique par somme de fréquence entre l'onde fondamentale et sa seconde harmonique.

11. Source optique non linéaire selon la revendication 9, **caractérisé en ce que** le système optique non linéaire (19) comprend deux cristaux non linéaires (1, 16) situés entre les première et seconde lames (2, 3), le premier cristal non linéaire (1) étant apte à doubler la fréquence de l'onde fondamentale incidente et le second cristal non linéaire (16) étant apte à la génération de 4ème harmonique par doublage de fréquence de la seconde harmonique.

12. Source optique non linéaire selon la revendication 9, **caractérisé en ce que** le système optique non linéaire (19) comprend trois cristaux non linéaires (1, 16) situés entre les première et seconde lames (2, 3), le premier cristal non linéaire (1) étant apte à doubler la fréquence de l'onde fondamentale incidente, le second cristal non linéaire (16) étant apte à la génération de la 3ème harmonique par mélange de fréquence de la seconde harmonique et de l'onde fondamentale, et le troisième cristal non linéaire étant apte à la génération de la 5éme harmonique par mélange de fréquence de la seconde harmonique et de la troisième harmonique produites par les cristaux (1, 16).

13. Source optique non linéaire selon la revendication 9 **caractérisée en ce que** le système optique non linéaire (19) comprend au moins un cristal situé entre les première et seconde lames (2, 3) apte à produire un rayonnement cohérent par génération paramétrique optique.

14. Source optique non linéaire selon l'une quelconque des revendications 9 à 13 et comprenant un moyen de mesurer la puissance émise du faisceau (17, 37, 47) après conversion de fréquence et un système d'entraînement apte à entraîner la rotation transverse des première et seconde lames (2, 3) lorsque la puissance émise diminue d'une valeur prédéfinie.

15. Source optique non linéaire selon l'une des revendications 9 à 14, **caractérisée en ce que** le dispositif d'allongement de la durée de vie d'un système optique non linéaire est placé à l'intérieur d'une cavité laser.

**Claims**

1. A device for extending the lifetime of a least one frequency-converting non-linear optical system (19) subjected to the radiation of an incident laser beam (7, 27), said optical system (19) being capable of converting the incident beam (7, 27) of fundamental optical frequency $\omega_1$ into an output beam (17) of optical frequency $\omega_2$, the device comprising:

   - a first transmission plate (2) with flat and parallel surfaces, of thickness $e_2$ and of index $n_2(\omega 1)$, capable of being inserted in the optical path of said incident laser beam (7) upstream from the optical system and of transmitting a beam (27), the normal $\eta_2$ to a flat surface of said first plate (2) forming an angle of inclination $i_2$ with the axis of propagation X of the laser beam (7),
   - a second transmission plate (3) with flat and parallel surfaces, of thickness $e_3$ and of index $n_3(\omega_2)$, capable of being inserted in the optical path of the beam (17) at the exit of said optical system (19) and of transmitting a beam (37, 47) of optical frequency ($\omega_2$, the normal $\eta_3$ to said second plate (3) forming an angle of inclination $i_3$ with respect to the axis of propagation X' of the beam (17),

   **characterized in that** it comprises:

   - a means for transverse rotation of said first plate (2) around at least one axis (Y, Z) transverse to the axis of propagation X of the laser beam (7), capable of modifying the inclination $i_2$ over an angular range $i_2^0 \pm \delta i_2$ to displace the beam (7) with respect to the optical system (19), without axial rotation of the first plate (2) around the beam (7) axis,
   - a means for transverse rotation of said second plate (3) around at least one axis (Y',Z') transverse to the axis of propagation X' of the beam (17), capable of modifying the inclination $i_3$ over an angular range $i_3^0 \pm \delta i_3$, without axial rotation of the second plate (3) around the beam (17) axis,
   - said first and second plates (2, 3) and the means for transverse rotation of the two plates being capable of minimizing the amplitude of the output beam (37, 47) displacement, in terms of position and of angular direction, over the range of angular inclination $i_2^0 \pm \delta i_2$ of the first plate.

2. A device according to claim 1, **characterized in that** it comprises means for mechanically coupling the first and second plates (2) and (3) capable of making the inclination $i_2$ of the first plate (2) and the inclination $i_3$ of the second plate (3) interdependent with each other over the angular range $i_2^0 \pm \delta i_2$, and **in that** the thickness $e_3$ of the second plate is capable of minimizing the amplitude of the residual displacement of the output (37, 47) as a function of the thickness $e_2$ of the first plate, of the optical indices $n_2(\omega_1)$ and $n_3(\omega_2)$ and of the angular range $i_2^0 \pm \delta i_2$.

3. A device according to claim 2, **characterized in that** the means for coupling the first and second plates (2, 3) comprise a mechanical drive means capable of causing the simultaneous inclination of the first and second plates (2, 3) with respective angles of inclination $i_2$ and $i_3$ opposite to each other.

4. A device according to claim 2, **characterized in that** the means for coupling the first and second plates (2, 3) comprise a mechanical drive means capable of causing the simultaneous inclination of the first and second plates (2, 3) with respective angles of inclination $i_2$ and $i_3$ equal to each other.

5. A device according to one of claims 2 to 4, **characterized in that** it comprises a rotation means common to the first plate (2) and the second plate (3), capable of modifying the inclination of the first and second plates (2) and (3) by an identical angle, and **in that** the incident beam (7, 27) and the output (17, 37, 47) propagate in a plane between the first and second plates (2, 3), and the output beam undergoes an odd number of reflections between the first and plates (2 and 3).

6. A device according to one of claims 1 to 5, **characterized in that** the amplitude of the beam (27) displacement induced by the inclination of the plate (2) over the range of angular inclination $i_2^0 \pm \delta i_2$ is chosen in order to remain larger than the diameter of the incident laser beam (27) on the optical system (19).

7. A device according to claim 1, **characterized in that** the first and second plates (2, 3) are identical and **in that** it comprises means capable of calculating and applying an angle of inclination $i_3$ as a function of the thickness ($e_2 = e_3$) of the first and second plates (2, 3), of the optical indices $n_2(\omega 1)$ and $n_3(\omega_2)$ thereof, and of the angle of inclination $i_2$, so as to compensate for the displacement of the output beam (37, 47) for each inclination $i_2$ over the angular range $i_2^0 \pm \delta i_2$.

8. A device according to any one of claims 1 to 7, **characterized in that** it comprises an optical system (5, 6) with a magnifying power, placed between the first and second plates, and **in that** the angle of inclination $i_3$, the thickness ($e_3$) and the index ($n_3$) of the plate (3) are determined as a function of the magnifying power of the system (5, 6), so as to compensate for the displacement of the output beam (37, 47) for each inclination $i_2$ over the angular range $i_2^0 \pm \delta i_2$.

9. A non-linear optical source comprising a non-linear optical system (19), **characterized in that** it comprises a device according to one of claims 1 to 6, whose first and second plates (2, 3) are arranged on either side of said non-linear optical system (19).

10. A non-linear optical source according to claim 9, **characterized in that** the non-linear optical system (19) comprises two non-linear crystals (1, 16) located between the first and second plates (2, 3), the first non-linear crystal (1) being capable of doubling the frequency of the incident fundamental wave and the second non-linear crystal (16) being capable of generating the 3$^{rd}$ harmonic by summing the frequencies of the fundamental wave and the second harmonic thereof.

11. A non-linear optical source according to claim 9, **characterized in that** the non-linear optical system (19) comprises two non-linear crystals (1, 16) located between the first and second plates (2, 3), the first non-linear crystal (1) being capable of doubling the frequency of the incident fundamental wave and the second non-linear crystal (16) being capable of generating the 4th harmonic by doubling the frequency of the second harmonic.

12. A non-linear optical source according to claim 9, **characterized in that** the non-linear optical system (19) comprises three non-linear crystals (1, 16) located between the first and second plates (2, 3), the first non-linear crystal (1) being capable of doubling the frequency of the incident fundamental wave, the second non-linear crystal (16) being capable of generating the 3$^{rd}$ harmonic by mixing the frequencies of the second harmonic and the fundamental wave, and the third non-linear crystal being capable of generating the 5$^{th}$ harmonic by mixing the frequencies of the second harmonic and the third harmonic produced by the first and second crystals (1, 16).

13. A non-linear optical source according to claim 9, **characterized in that** the non-linear optical system (19) comprises at least one crystal located between the first and second plates (2, 3), capable of producing a coherent radiation by optical parametric generation,

14. A non-linear optical source according to any one of claims 9 to 13, and comprising a means for measuring the transmitted power of the beam (17, 37, 47) after frequency conversion and a drive system capable of causing the transverse rotation of the first and second plates (2, 3) when the transmitted power decreases by a predefined value.

15. A non-linear optical source according to any one of claims 9 to 14, **characterized in that** the device for extending the lifetime of a non-linear optical system is placed inside a laser cavity.

**Patentansprüche**

1. Einrichtung zur Verlängerung der Dienstlebensdauer eines nicht linearen optischen Systems (19), das Frequenz umwandelt, das einer Strahlung eines einfallenden Laserstrahls (7, 27) ausgesetzt ist, wobei das optische System (19) geeignet ist, um den einfallenden Strahl (7, 27) mit optischer Grundfrequenz $\omega_1$ in einen Ausgangsstrahl (17) mit optischer Frequenz $\omega_2$ umzuwandeln, wobei die Vorrichtung Folgendes aufweist:

    - eine erste Übertragungsplatte (2) mit ebenen und parallelen Seiten mit der Stärke $e_2$ und dem Index $n_2(\omega_1)$, die geeignet ist, um auf dem optischen Verlauf des einfallenden Laserstrahls (7) stromaufwärts des optischen Systems eingefügt zu werden und einen Strahl (27) zu übertragen, wobei die Senkrechte $\eta_2$ zu einer ebenen

Fläche der ersten Platte (2) einen Neigungswinkel $i_2$ mit der Ausbreitungsachse X des Laserstrahls (7) bildet,
- eine zweite Übertragungsplatte (3) mit ebenen und parallelen Seiten mit der Stärke $e_3$ und dem Index $n3(\omega_2)$, die geeignet ist, um auf dem optischen Verlauf des Strahls (17) am Ausgang des optischen Systems (19) eingefügt zu werden und einen Strahl (37, 47) mit optischer Frequenz $\omega_2$ zu übertragen, wobei die Senkrechte $\eta_3$ zu der zweiten Platte (3) einen Neigungswinkel $i_3$ in Bezug zu der Ausbreitungsachse X' des Strahls (17) bildet,

**dadurch gekennzeichnet, dass** sie Folgendes aufweist:

- ein Mittel zum Querdrehen der ersten Platte (2) um mindestens eine Achse (Y, Z), die zu der Ausbreitungsachse X des Laserstrahls (7) quer und geeignet ist, um die Neigung $i_2$ auf einem Winkelbereich $i_2^0 \pm \delta i_2$ zu ändern, um den Strahl (7) in Bezug zu dem optischen System (19) ohne axiale Drehung der ersten Platte (2) um die Achse des Strahls (7) zu verlagern,
- ein Mittel zum Querdrehen der zweiten Platte (3) um mindestens eine Achse (Y', Z'), die zu der Ausbreitungsachse X' des Strahls (17) quer ist, die geeignet ist, um die Neigung $i_3$ auf einem Winkelbereich $i_3^0 \pm \delta i_3$ ohne axiale Drehung der zweiten Platte (3) um die Achse des Strahls (17) zu ändern,
- wobei die erste und die zweite Platte (2, 3) und die Querdrehungsmittel der zwei Platten geeignet sind, um die Amplitude der Belegung in Position und Winkelrichtung des Ausgangsstrahls (37, 47) auf dem Winkelneigungsbereich $i_2^0 \pm \delta i_2$ der ersten Platte zu minimieren.

2. Vorrichtung nach Anspruch 1, **dadurch gekennzeichnet, dass** sie Mittel zum mechanischen Kuppeln der ersten (2) und der zweiten Platte (3) aufweist, die geeignet sind, um die Neigung $i_2$ der ersten Platte (2) und die Neigung $i_3$ der zweiten Platte (3) auf dem Winkelbereich $i_2^0 \pm \delta i_2$ zu verbinden, und dass die Stärke $e_3$ der zweiten Platte geeignet ist, um die Amplitude der Restbewegung des Ausgangsstrahls (37, 47) in Abhängigkeit von der Stärke $e_2$ der ersten Platte, der optischen Indices $n_2(\omega_1)$ und $n_3(\omega_2)$ und des Winkelbereichs $i_2^0 \pm \delta i_2$ zu minimieren.

3. Vorrichtung nach Anspruch 2, **dadurch gekennzeichnet, dass** die Mittel zum Kuppeln der ersten und der zweiten Platte (2, 3) ein mechanisches Antriebsmittel aufweisen, das geeignet ist, um das gleichzeitige Neigen der ersten und der zweiten Platte (2, 3) mit jeweiligen entgegengesetzten Neigungswinkeln $i_2$ und $i_3$ anzutreiben.

4. Vorrichtung nach Anspruch 2, **dadurch gekennzeichnet, dass** die Kuppelmittel der und der zweiten Platte (2, 3) ein mechanisches Antriebsmittel aufweisen, geeignet ist, um das gleichzeitige Neigen der ersten und der zweiten Platte (2, 3) mit jeweils gleichen Neigungswinkeln $i_2$ und $i_3$ anzutreiben,

5. Vorrichtung nach einem der Ansprüche 2 bis 4, **dadurch gekennzeichnet, dass** sie ein Mittel zum gemeinsamen Drehen der ersten Platte (2) und der zweiten Platte (3) aufweiset, das geeignet ist, um die Neigung der ersten und der zweiten Platte (2, 3) um einen identischen Winkel zu ändern, und dass der einfallende Strahl (7, 27) und der Ausgangsstrahl (17, 37, 47) sich in einer Ebene zwischen der ersten und der zweiten Platte (2, 3) ausbreiten und der Ausgangsstrahl eine ungerade Anzahl Reflexionen zwischen der ersten un der zweiten Platte (2, 3) erfährt.

6. Vorrichtung nach einem der Ansprüche 1 bis 5, **dadurch gekennzeichnet, dass** die Bewegungsamplitude des Strahls (27), die von der Neigung der Platte (2) auf dem Winkelbereich $i_2^0 \pm \delta i_2$ verursacht wird, derart ausgewählt wird, dass sie größer bleibt als der Durchmesser des Laserstrohls (27), der auf dem optischen System (19) einfällt.

7. Vorrichtung nach Anspruch 1, **dadurch gekennzeichnet, dass** die erste und die zweite Platte (2, 3) identisch sind, und dass sie Mittel ausweist, die geeignet sind, um einen Neigungswinkel $i_3$ in Abhängigkeit von der Stärke ($e_2=e_3$) der ersten und der zweiten Platte (2, 3), von den optischen Indices $n_2(\omega_1)$ und $n_3(\omega_2)$ sowie von dem Neigungswinkel $i_2$ derart zu berechnen und abzuwenden, dass die Belegung des Ausgangsstrahls (37, 47) für jede Neigung $i_2$ auf dem Winkelbereich $i_2^0 \pm \delta i_2$ kompensiert wird.

8. Vorrichtung nach einem der Ansprüche 1 bis 7, **dadurch gekennzeichnet, dass** sie ein optisches System (5, 6) aufweist, das eine optische Vergrößerung hat, die zwischen der ersten und der zweiten Platte platziert ist, und dass der Neigungswinkel $i_3$, die Stärke ($e_3$) und der Index ($n_3$) der Platte (3) in Abhängigkeit von der Vergrößerung des Systems (5, 6) derart bestimmt werden, dass die Bewegung des Ausgangsstrahls (37, 47) für jede Neigung $i_2$ auf dem Winkelbereich $i_2^0 \pm \delta i_2$ kompensiert wird.

9. Nicht lineare optische Quelle, die ein nicht lineares optisches System (19) aufweist, **dadurch gekennzeichnet, dass** sie eine Vorrichtung nach einem der Ansprüche 1 bis 6 aufweist, deren erste und zweite Platte (2, 3) jeweils auf einer Seite des nicht linearen optischen Systems (19) angeordnet sind.

**10.** Nicht lineare optische Quelle nach Anspruch 9, **dadurch gekennzeichnet, dass** das nicht lineare optische System (19) zwei nicht lineare Kristalle (1, 16) aufweist, die zwischen der ersten und der zweite Platte (2, 3) liegen, wobei der erste nicht lineare Kristall (1) geeignet ist, um die Frequenz der einfallenden Grundwelle zu verdoppeln, und der zweite nicht lineare Kristall (16) für das Erzeugen der 3. Harmonischen durch die Frequenzsumme zwischen der Grundwelle und der 2. Harmonischen geeignet ist.

**11.** Nicht lineare optische Quelle nach Anspruch 9, **dadurch gekennzeichnet, dass** das nicht lineare optische System (19) zwei nicht lineare Kristall (1, 16) aufweist, die zwischen der ersten und der zweiten Platte (2, 3) liegen, wobei der erste nicht lineare Kristall (1) geeignet ist, um die Frequenz der einfallenden Grundwelle zu verdoppeln, und der zweite nicht lineare Kristall (16) zur Erzeugung der 4. Harmonischen durch Frequenzverdoppeln der 2. Harmonischen geeignet ist.

**12.** Nicht lineare optische Quelle nach Anspruch 9, **dadurch gekennzeichnet dass** das nicht lineare optische System (19) drei nicht lineare Kristalle (1, 16) aufweist, die zwischen der ersten und der zweiten Platte (2, 3) liegen, wobei der erste nicht lineare Kristall (1) geeignet ist, um die Frequenz der einfallenden Grundwelle zu verdoppeln, der zweite nicht lineare Kristall (16) zur Erzeugung der 3. Harmonischen durch Frequenzmischen der 2. Harmonischen und der Grundwelle geeignet ist, und der dritte nicht lineare Kristall zur Erzeugung der 5. Harmonischen durch Frequenzmischen der 2. Harmonischen und der 3. Harmonischen, die von den Kristallen (1, 16) erzeugt werden, geeignet ist.

**13.** Nicht lineare optische Quelle nach Anspruch 9, **dadurch gekennzeichnet, dass** das nicht lineare optische System (19) mindestens einen Kristall aufweist, der zwischen der ersten und der zweiten Platte (2, 3) liegt, der geeignet list, um eine kohärente Strahlung durch optische parametrische Erzeugung zu produzierten.

**14.** Nicht lineare optische Quelle nach einem der Ansprüche 9 bis 13, die ein Mittel zum Messen der Leistung, die von dem Strahl (17, 37, 47) nach dem Frequenzwandeln gesendet wird, aufweist, und ein Antriebssystem, das geeignet ist, um die Querdrehung der ersten und der zweiten Platte (2, 3) anzutreiben, wenn die gesendete Leistung um einen vordefinierten Wert sinkt.

**15.** Nicht lineare optische Quelle nach einem der Ansprüche 9 bis 14, **dadurch gekennzeichnet, dass** die Vorrichtung zur Verlängerung der Lebensdauer eines nicht linearen optischen Systems im inneren eines Laserhohlraums platziert ist.

Figure 1

Figure 2

Art ant.

Figure 3

Figure 4

Figure 5

Figure 6

Art ant.

Figure 7

Figure 8

Figure 9

Figure 10

Figure 11

Figure 12

**RÉFÉRENCES CITÉES DANS LA DESCRIPTION**

**Documents brevets cités dans la description**

- US 5179562 A
- US 5825562 A, Lai
- US 20030147433 A
- US 6859335 B
- US 5646764 A
- WO 03102665 A